# EUROPÄISCHE PATENTSCHRIFT

(11) **EP 1 674 311 B1**
(45) Veröffentlichungstag und Bekanntmachung des Hinweises auf die Patenterteilung: **25.01.2012**
(21) Anmeldenummer: 05025666.8
(22) Anmeldetag: 24.11.2005
(51) Int. Cl.: B60J 1/16

(54) **Schiebefenster, insbesondere für ein Kraftfahrzeug**
Sliding window, in particular for a vehicle
Vitre coulissante, en particulier pour un véhicule

(30) Priorität: 21.12.2004 DE 102004061567
(43) Veröffentlichungstag der Anmeldung: 28.06.2006
(60) Teilanmeldung: 08009958.3
(73) Patentinhaber: DURA Automotive Body & Glass Systems GmbH, 58840 Plettenberg (DE)
(72) Erfinder: Kraus, Jürgen, 58802 Balve (DE); Schulte, Martin, 58802 Balve (DE); Rau, Holger, 51580 Reichshof (DE)
(74) Vertreter: Zinnecker, Armin

(56) Entgegenhaltungen:
- DE-A1- 19 911 022
- DE-A1- 19 961 354
- DE-U1- 29 922 215
- FR-A1- 2 829 971
- US-A1- 2004 160 082

## Beschreibung

Die Erfindung betrifft ein Schiebefenster für ein Fahrzeug, insbesondere für ein Kraftfahrzeug, mit einem beweglichen Fenster, das in Führungen verschieblich geführt ist. Die Erfindung betrifft ferner ein Fahrzeug, insbesondere ein Kraftfahrzeug mit einem derartigen Schiebefenster.

Ein derartiges Schiebefenster ist aus der EP 0 968 862 A2 bekannt. Es kann in die Karosserie oder in eine Türe eines Fahrzeugs, insbesondere eines Kraftfahrzeugs, eingebaut werden.

Bei diesem und anderen vorbekannten Schiebefenstern für Fahrzeuge verlaufen die Führungen für das bewegliche Fenster parallel zueinander und im Abstand voneinander. Ferner sind die Führungen parallel zu den Kanten des feststehenden Karosserieteils oder des feststehenden Fensters vorgesehen.

Es gibt allerdings auch Fahrzeuge oder Kraftfahrzeuge, bei denen die von außen sichtbaren Kanten nicht parallel zueinander verlaufen. Dies bedeutet, daß der Abstand paralleler Führungsschienen und damit die Größe oder Höhe des beweglichen Fensters nach dem kleinsten vorhandenen Bauraum ausgerichtet werden muß.

Aus der DE 199 61 354 A1 ist ein Schiebefenster nach dem Oberbegriff des Anspruchs 1 bekannt.

Die FR-A1-2 829 971 offenbart ein Schiebefenster für ein Fahrzeug mit einem beweglichen Fenster, das in Führungen verschieblich geführt ist, die an einem feststehenden Fenster vorgesehen sind und die in einem Winkel zueinander verlaufen, wobei für das bewegliche Fenster eine Längenausgleichseinrichtung vorgesehen ist.

Aufgabe der Erfindung ist es, ein verbessertes Schiebefenster der eingangs angegebenen Art vorzuschlagen.

Erfindungsgemäß wird diese Aufgabe durch die kennzeichnenden Merkmale des Anspruchs 1 gelöst. Die Führungen für das bewegliche Fenster verlaufen in einem Winkel zueinander. Für das bewegliche Fenster ist eine Längenausgleichseinrichtung vorgesehen. Die Längenausgleichseinrichtung ist geeignet, den sich ändernden Abstand zwischen dem beweglichen Fenster und einer oder beiden Führungen auszugleichen, der entsteht, wenn das bewegliche Fenster bewegt wird.

Die Führungen sind an einem feststehenden Fenster vorgesehen . Sie können insbesondere mit dem feststehenden Fenster verklebt sein. Das feststehende Fenster kann in eine Öffnung in der Karosserie oder in einer Türe oder Klappe des Fahrzeugs oder Kraftfahrzeugs eingesetzt sein. Es kann dort insbesondere mit der Karosserie oder der Tür oder der Klappe verklebt sein. Vorteilhaft ist es, wenn die Karosserie oder Tür oder Klappe im Bereich des äußeren Randes des feststehenden Fensters eine Einziehung aufweist, so daß die Außenfläche des feststehenden Fensters mit der angrenzenden Außenfläche der Karosserie oder Tür oder Klappe fluchtet. Ferner ist es vorteilhaft, wenn die Außenfläche des beweglichen Fensters mit dem feststehenden Fenster oder dem sonstigen feststehenden Teil des Fahrzeugs oder Kraftfahrzeugs fluchtet.

Die Längenausgleichseinrichtung umfaßt eine Schwenklagerung für eine Führung. In diesem Fall ist es vorteilhaft, wenn zwischen der schwenkbar gelagerten Führung und einem fahrzeugfesten Teil, insbesondere dem feststehenden Fenster, ein Ausgleichselement vorgesehen ist. Stattdessen oder zusätzlich kann zwischen der schwenkbar gelagerten Führung und dem beweglichen Fenster ein Ausgleichselement vorgesehen sein.

Vorteilhafte Weiterbildungen sind in den Unteransprüchen beschrieben.

Nach einer vorteilhaften Weiterbildung umfaßt die Längenausgleichseinrichtung ein oder mehrere Ausgleichselemente.

Vorzugsweise sind zwischen dem beweglichen Fenster und einer Führung eines oder mehrere, vorzugsweise zwei, Ausgleichselemente vorgesehen. Es ist allerdings auch möglich, daß zwischen dem beweglichen Fenster und beiden Führungen eines oder mehrere, vorzugsweise zwei, Ausgleichselemente vorgesehen sind.

Eine weitere vorteilhafte Weiterbildung ist dadurch gekennzeichnet, daß eines oder mehrere oder alle Ausgleichselemente eine Feder und/oder ein federnd wirkendes Bauteil und/oder einem Dämpfer und/oder ein dämpfend wirkendes Bauteil umfassen oder daraus bestehen.

Ein Fahrzeug, insbesondere Kraftfahrzeug, gemäß der Erfindung ist durch ein erfindungsgemäßes Schiebefenster gekennzeichnet.

Ausführungsbeispiele der Erfindung werden nachstehend anhand der beigefügten Zeichnung im einzelnen erläutert. In der Zeichnung zeigt
- Fig. 1: ein Kraftfahrzeug in einer Seitenansicht, .
- Fig. 2: ein vorbekanntes Schiebefenster für ein Kraftfahrzeug,
- Fig. 3: eine erste Ausführungsform eines erfindungsgemäßen Schiebefensters mit einer schwenkbar gelagerten Führung in einer Seitenansicht,
- Fig. 4: eine abgewandelte Ausführungsform des Schiebefensters gemäß Fig. 3,
- Fig. 5: das Schiebefenster gemäß Fig. 4 in einer weiteren Seitenansicht im geschlossenen Zustand,
- Fig. 6: das Schiebefenster gemäß Fig. 4 und 5 im geöffneten Zustand,
- Fig. 7: eine zweite Ausführungsform eines erfindungsgemäßen Schiebefensters mit Ausgleichselementen zwischen dem beweglichen Fenster und einer Führung in einer Seitenansicht im geschlossenen Zustand,
- Fig. 8: das Schiebefenster gemäß Fig. 7 im geöffneten Zustand und
- Fig. 9: eine dritte Ausführungsform eines erfindungsgemäßen Schiebefensters mit jeweils zwei Ausgleichselementen zwischen dem beweglichen Fenster und beiden Führungen.

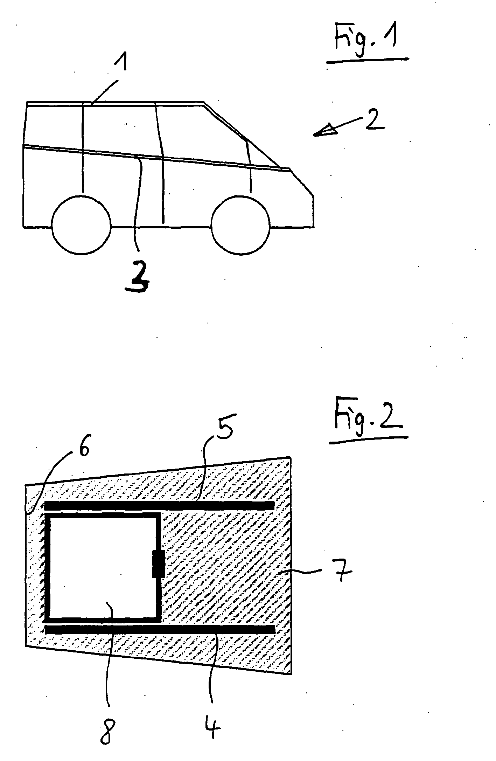

Bei dem in Fig. 1 gezeigten Kraftfahrzeugdesign verlaufen die von der Seite sichtbaren Kanten, nämlich die horizontale Dachlinie 1 und die in der Mitte des Kraftfahrzeugs 2 verlaufende Linie 3 in einem Winkel von etwa 5° bis 20° zueinander. Bei einem vorbekannten Schiebefenster, das in Fig. 2 in einer Seitenansicht dargestellt ist, verlaufen die Führungen 4, 5 parallel zueinander und in einem Abstand voneinander. Der Abstand der parallelen Führungsschienen 4, 5 muß dann nach dem kleinsten Bauraum ausgelegt werden, also nach der Höhe der kürzeren Seite 6 des feststehenden Fensters 7. Die Höhe und die Fläche des beweglichen Fensters 8 sind entsprechend begrenzt. Ferner unterscheidet sich das rechteckige oder quadratische Design des beweglichen Fensters 8 vom konischen Design des feststehenden Fensters 7, was zu einer nachteiligen "Optik" des gesamten Erscheinungsbilds führt.

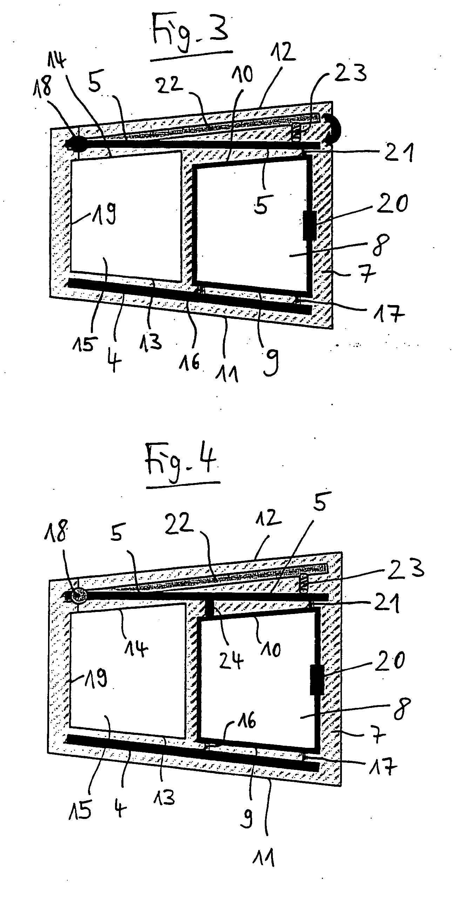

Bei der in Fig. 3 bis 6 gezeigten, ersten Ausführungsform der Erfindung ist das bewegliche Fenster 8 in einer unter Führung 4 und einer oberen Führung 5 verschieblich geführt. Der untere Rahmen 9 und der obere Rahmen 10 des beweglichen Fensters 8 verlaufen konisch, also in einem von null verschiedenen Winkel zueinander. In entsprechender Weise verlaufen die untere Kante 11 und die obere Kante 12 des feststehenden Fensters 7 ebenfalls in einem von null verschiedenen Winkel zueinander, vorzugsweise im selben Winkel wie der untere Rahmen 9 und der obere Rahmen 10 des beweglichen Fensters 8 und die untere Kante 13 und die obere Kante 14 des Ausschnitts 15 im feststehenden Fenster 7.

Wie aus Fig. 3 ersichtlich ist der untere Rahmen 9 des beweglichen Fensters 8 durch zwei Führungsbolzen 16, 17 in der unteren Führung 4 geführt. Die obere Führung 5 ist um eine horizontal verlaufende Achse 18, die im Bereich der hinteren Kante 19 des Ausschnitts 15 liegt, schwenbar gelagert. Die Achse 18 liegt in einem geringen Abstand über dem oberen Ende der hinteren Kante 19. Wenn das bewegliche Fenster 8 durch einen Zug an seinem Handgriff 20 aus der über dem Ausschnitt 15 liegenden Stellung in die in Fig. 3 gezeigte Stellung überführt wird, in der das Schiebefenster geöffnet ist, schwenkt die obere Führung 5 in der aus Fig. 3 ersichtlichen Weise nach unten. Auf diese Weise wird ein Längenausgleich für den oberen Führungsbolzen 21, mit dem der obere Rahmen 10 in der oberen Führung 5 geführt ist, erzeugt. Der Führungsbolzen 21 bleibt in seiner Länge unverändert. Der Längenausgleich erfolgt durch die schwenkbare Lagerung der oberen Führung 5.

Zwischen der schwenkbar gelagerten Führung 5 und dem Führungshalter 22 ist ein Ausgleichselement 23 vorgesehen, nämlich eine Feder, inbesondere eine Druckfeder, oder ein federndes Element. Der Führungshalter 22 ist mit dem feststehenden Fenster 7 verklebt. Er verläuft in einem Winkel zur unteren Führung 4.

Bei der in Fig. 4 bis 6 gezeigten Abwandlung ist ferner zwischen der schwenkbar gelagerten Führung 5 und dem beweglichen Fenster 8 ein weiteres Ausgleichselement 24 vorgesehen, bei dem es sich ebenfalls um eine Feder, vorzugsweise eine Druckfeder, oder ein federndes Element handeln kann.

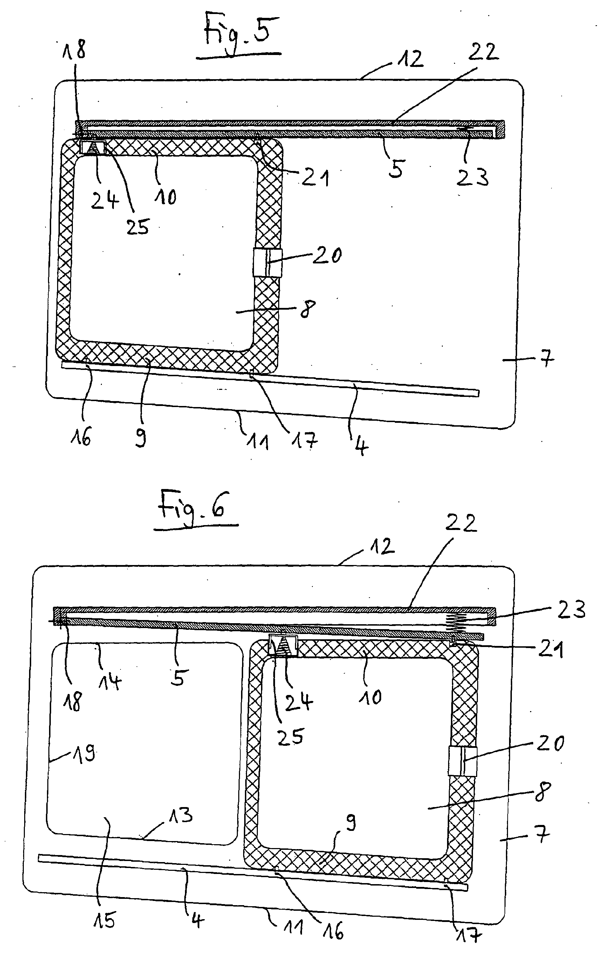

In den Figuren 5 und 6 sind weitere Einzelheiten der Abwandlung gemäß Fig. 4 gezeigt. Das Ausgleichselement 23 besteht aus einer Druckfeder. Das weitere Augleichselement 24 besteht ebenfalls aus einer Druckfeder, nämlich einer Spiralfeder, deren unteres Ende mit dem oberen Rahmen 10 des beweglichen Fensters 8 verbunden ist und deren oberes Ende mit dem Grund eines topfförmigen Bauteils 25 verbunden ist, welches an der Unterseite der oberen Führung 5 befestigt ist. Das topfförmige Bauteil 25 ist in einer entsprechenden topfförmigen Außenführung in dem oberen Rahmen 10 des beweglichen Fensters 8 geführt.

Der Führungshalter 22 ist mit der Innenseite des feststehenden Fensters 7 verklebt. An einem Ende des Führungshalters 22 ist die Schwenkachse 18 für die obere Führung 5 vorgesehen. Die das Ausgleichselement 23 bildende Druckfeder ist mit ihrem oberen Ende an der Innenseite des Führungshalters 22 und mit ihrem anderen Ende an der schwenkbaren Führung 5 befestigt.

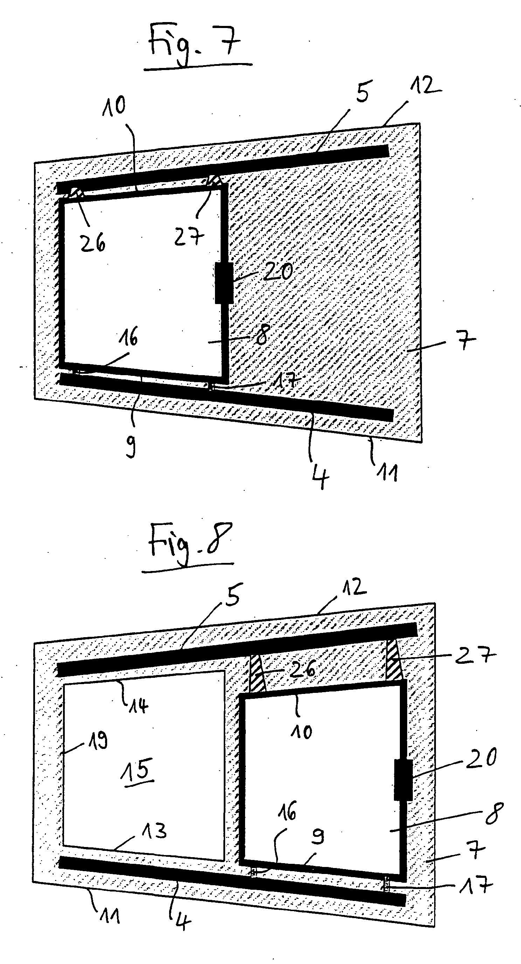

Bei der in Fig. 7 und 8 gezeigten, zweiten Ausführungsform sind beide Führungen 4, 5 mit der Innenseite des feststehenden Fensters 7 verklebt. Wenn das bewegliche Fenster 8 aus der in Fig. 7 gezeigten, geschlossenen Stellung, in der es den Ausschnitt 15 abdeckt, in die in Fig. 8 gezeigte, offene Stellung, in der der Ausschitt 15 freigegeben wird, verschoben wird, erfolgt der Längenausgleich, also der Ausgleich des sich vergrößernden Abstandes zwischen der oberen Kante 10 des beweglichen Fensters 8 und der oberen Führung 5, durch Ausgleichselemente 26, 27, die zwischen dem oberen Rahmen 10 des beweglichen Fensters 8 und der oberen Führung 5 vorgesehen sind. Der untere Rahmen 9 des beweglichen Fensters 8 ist durch Führungsbolzen 16, 17 in der unteren Führung 4 geführt. Bei den Ausgleichselementen 26, 27 kann es sich um federnde Elemente, insbesondere Spiralfedern, handeln.

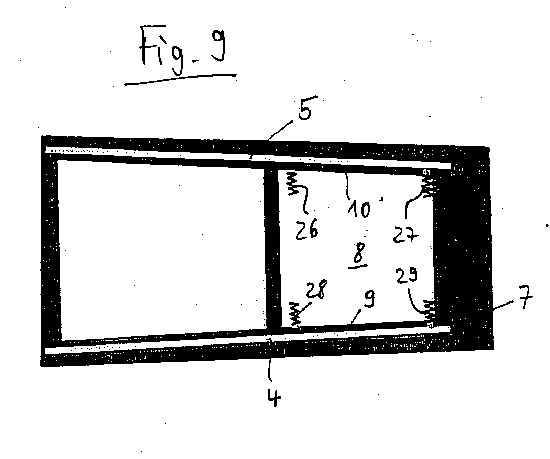

Bei der in Fig. 9 gezeigten, dritten Ausführungsform sind sowohl mit dem unteren Rahmen 9 als auch mit dem oberen Rahmen 10 des beweglichen Fensters 8 jeweils zwei Ausgleichselemente 28, 29 und 26, 27 verbunden.

Durch die Erfindung kann eine höhere Ausnutzung der Durchsicht durch das Kraftfahrzeugfenster erreicht werden. Die Designmöglichkeiten werden verbessert. Es ist eine verbesserte Anpassung an den Fahrzeug-Rohbau möglich. Wenigstens an einer Seite des beweglichen Fensters, also oben oder unten, oder auch an beiden Seiten, ist ein Längenausgleich vorgesehen. Vorteilhaft ist es, den Ausschnitt für das bewegliche Fenster im schmaleren Bereich des feststehenden Fensters vorzusehen, wie in den Zeichnungsfiguren dargestellt. Es ist allerdings auch die umgekehrte Anordnung möglich, bei der der Ausschnitt für das bewegliche Fenster im breiteren bzw. größeren Bereich des feststehendes Fensters vorgesehen ist und das bewegliche Fenster zum Öffnen in den schmaleren Bereich verschoben wird.

Vorteilhaft ist es, wenn der Längenausgleich nur auf einer Seite des beweglichen Fensters vorgenommen wird. In diesem Fall wird das bewegliche Fenster parallel zu einer Führung verschoben. Es ist allerdings auch möglich, auf beiden Seiten des beweglichen Fensters einen Längenausgleich vorzusehen, wie insbesondere in Fig. 9 gezeigt.

## Patentansprüche

1. Schiebefenster für ein Fahrzeug, insbesondere für ein Kraftfahrzeug, mit einem beweglichen Fenster (8), das in Führungen (4, 5) verschieblich geführt ist, die in einem Winkel zueinander verlaufen, wobei für das bewegliche Fenster (8) eine Längenausgleichseinrichtung (18;23;24; 26, 27; 28, 29) vorgesehen ist, die eine Schwenklagerung (18) für eine Führung (5) umfaßt,
**dadurch gekennzeichnet,**
**daß** die Führungen (4, 5) an einem feststehenden Fenster (7) vorgesehen sind.

2. Schiebefenster nach Anspruch 1, **dadurch gekennzeichnet, daß** die Längenausgleichseinrichtung ein Ausgleichselement (23; 24; 26, 27; 28, 29) umfaßt.

3. Schiebefenster nach Anspruch 1 oder 2, **dadurch gekennzeichnet, daß** zwischen der schwenkbar (18) gelagerten Führung (5) und einem fahrzeugfesten Teil (7) ein Ausgleichselement (23) vorgesehen ist.

4. Schiebefenster nach einem der vorhergehenden Ansprüche, **dadurch gekennzeichnet, daß** zwischen der schwenkbar (18) gelagerten Führung (5) und dem beweglichen Fenster (8) ein Ausgleichselement (24) vorgesehen ist.

5. Schiebefenster nach einem der vorhergehenden Ansprüche, **dadurch gekennzeichnet, daß** zwischen dem beweglichen Fenster (8) und einer Führung (5) eines oder mehrere Ausgleichselemente (26, 27) vorgesehen sind.

6. Schiebefenster nach einem vorhergehenden Ansprüche, **dadurch gekennzeichnet, daß** eines oder mehrere oder alle Ausgleichselemente (23, 24, 26, 27, 28, 29) eine Feder und/oder ein federnd wirkendes Bauteil und/oder einen Dämpfer und/oder ein dämpfend wirkendes Bauteil umfassen oder daraus bestehen.

7. Fahrzeug, insbesondere Kraftfahrzeug, **gekennzeichnet durch** ein Schiebefenster nach einem der Ansprüche der 1 bis 6.

## Claims

1. A sliding window for a vehicle, in particular for a motor vehicle, comprising a movable window (8) which is guided displaceably in guides (4, 5) which extend at an angle to one another, a length compensation means (18; 23; 24; 26, 27; 28, 29) being provided for the movable window (8) and comprising a pivot bearing (18) for a guide (5), **characterised in that** the guides (4, 5) are provided on a fixed window (7).

2. The sliding window according to claim 1, **characterised in that** the length compensation means comprises a compensation element (23; 24; 26, 27; 28, 29).

3. The sliding window according to either claim 1 or claim 2, **characterised in that** a compensation element (23) is provided between the pivotably (18) mounted guide (5) and a part (7) fixed on the vehicle.

4. The sliding window according to any one of the preceding claims, **characterised in that** a compensation element (24) is provided between the pivotably (18) mounted guide (5) and the movable window (8).

5. The sliding window according to any one of the preceding claims, **characterised in that** one or more compensation elements (26, 27) is/are provided between the movable window (8) and a guide (5).

6. The sliding window according to any one of the preceding claims, **characterised in that** one or more or all compensation elements (23, 24, 26, 27, 28, 29) comprise or consist of a spring and/or a component acting in a springlike manner and/or a dampener and/or component acting in a dampening manner.

7. A vehicle, in particular a motor vehicle, **characterised by** a sliding window according to any one of claims 1 to 6.

## Revendications

1. Vitre coulissante pour un véhicule, en particulier pour un véhicule automobile, avec une vitre mobile (8) qui est guidée d'une manière déplaçable dans des guidages (4, 5), qui s'étendent selon un angle l'un à l'autre, où est prévu pour la vitre mobile (8) une installation d'égalisation de longueur (18;23;24; 26, 27; 28, 29) qui comprend un palier pivotante (18) pour un guidage (5),
**caractérisée en ce que** les guidages (4, 5) sont prévus à une vitre fixe (7).

2. Vitre coulissante selon la revendication 1, **caractérisée en ce que** l'installation d'égalisation de longueur comprend un élément d'égalisation (23; 24; 26, 27; 28, 29).

3. Vitre coulissante selon la revendication 1 ou 2, **caractérisée en ce qu'**il est prévu entre le guidage (5) logé d'une manière pivotante (18) et une partie (7) solidaire du véhicule un élément d'égalisation (23).

4. Vitre coulissante selon l'une des revendications précédentes, **caractérisée en ce qu'**un élément d'égalisation (24) est prévu entre le guidage (5) logé d'une manière pivotante (18) et la vitre mobile (8).

5. Vitre coulissante selon l'une des revendications précédentes, **caractérisée en ce qu'**un ou plusieurs éléments d'égalisation (26, 27) sont prévus entre la vitre mobile (8) et un guidage (5).

6. Vitre coulissante selon l'une des revendications précédentes, **caractérisée en ce qu'**un ou plusieurs ou tous les éléments d'égalisation (23, 24, 26, 27, 28, 29) comprennent un ressort et/ou un composant ayant un effet de ressort et/ou un amortisseur et/ou un composant ayant un effet d'amortissement ou sont constituées par ceux-ci.

7. Véhicule, en particulier véhicule automobile, **caractérisé par** une vitre coulissante selon l'une des revendications 1 à 6.
